**Europäisches Patentamt**

**European Patent Office**

**Office européen des brevets**

(19)

(11) Numéro de publication: **0 093 282**
**B1**

# FASCICULE DE BREVET EUROPEEN

(45) Date de publication du fascicule du brevet:
06.08.86

(21) Numéro de dépôt: **83103510.0**

(22) Date de dépôt: **12.04.83**

(51) Int. Cl.⁴: **H 01 M 6/18**

(54) **Pile au lithium comportant un électrolyte solide formé par une composition vitreuse conductrice.**

(30) Priorité: **16.04.82 FR 8206560**

(43) Date de publication de la demande:
**09.11.83 Bulletin 83/45**

(45) Mention de la délivrance du brevet:
**06.08.86 Bulletin 86/32**

(84) Etats contractants désignés:
**AT BE CH DE FR GB IT LI LU NL SE**

(56) Documents cités:
**FR - A - 2 373 169**
**US - A - 3 663 299**
**US - A - 4 212 930**
**US - A - 4 268 587**

**PATENTS ABSTRACTS OF JAPAN, vol. 6, no. 37 (E-97) (915), 6 march 1982**

(73) Titulaire: **Société Anonyme dite SAFT, 156, avenue de Metz, F-93230 Romainville (FR)**

(72) Inventeur: **Gabano, Jean-Paul, 11, rue des Dames des Roches, F-86000 Poitiers (FR)**
Inventeur: **Duchange, Jean-Pierre, Le Bourg Nouaille Maupertuis, F-86340 Villedieu Du Clain (FR)**

(74) Mandataire: **Weinmiller, Jürgen et al, Zeppelinstrasse 63, D-8000 München 80 (DE)**

ACTORUM AG

## Description

Dans le document EP-A 36105 on décrit une pile au lithium à électrolyte solide, comportant une composition vitreuse répondant à la formule $aP_2S_5$, $bLi_2S$, $cLiX$ dans laquelle X représente le chlore, le brome ou l'iode, a, b, c représentant des nombres choisis de telle sorte que le rapport

$$\frac{b}{a+b}$$

soit compris entre 0,61 et 70 et le rapport

$$\frac{c}{a+b+c}$$

soit inférieur ou égal à une limite correspondant à la solubilité en phase vitreuse de LiX dans le composé $aP_2S_5$, $bLi_2S$.

Dans une demande de brevet européen antérieure publiée sous le n° 68307 après la date de priorité de la présente demande, on a proposé un générateur similaire dont l'électrolyte a la composition suivante:

0,37 $Li_2S$, 0,18 $P_2S_5$, 0,45 LiI

De plus la matière active positive, outre un conducteur électronique, comporte entre 20 et 80% d'électrolyte solide en volume.

En pratique, ces générateurs peuvent être constitués par un empilement de pastilles comprimées d'électrolyte solide, prises de façon appropriée entre une pastille de lithium et une cathode.

Toutefois l'un des problèmes rencontrés avec des générateurs de ce type concerne les polarisations à caractère ohmique qui se créent aux interfaces électrodes/électrolyte notamment au niveau de l'électrode négative dont l'adhérence à l'électrolyte solide présente en général un caractère aléatoire peu reproductible.

L'invention a notamment pour but de remédier à cet inconvénient.

L'invention a pour objet une pile au lithium comportant un électrolyte solide formé par une composition vitreuse conductrice répondant à la formule $aP_2S_5$, $bLi_2S$, $cLiX$ dans laquelle X représente le chlore, le brome ou l'iode, a, b, c étant des nombres choisis de telle sorte que le rapport

$$\frac{b}{a+b}$$

soit compris entre 0,61 et 0,70 et le rapport

$$\frac{c}{a+b+c}$$

soit inférieur ou égal à une limite correspondant à la solubilité en phase vitreuse de LiX dans le composé $aP_2S_5$, $bLi_2S$, la matière active positive comportant en volume 20 à 80% d'électrolyte solide, ainsi qu'un conducteur électronique, caractérisée par le fait que l'on introduit dans l'électrolyte un corps choisi parmi les halogènes et les chalcogènes, afin de réaliser in situ par réaction chimique à l'interface lithiumélectrolyte une couche d'accrochage conductrice ioniquement formée par un halogénure ou un chalcogénure de lithium.

Même si la couche ainsi formée in situ, qui peut être discontinue, a une conductivité ionique faible, sa minceur permet de ne pas accroître sensiblement la résistance ohmique de l'électrolyte.

Le film mince d'halogénure ou de chalcogénure ainsi formé permet la liaison des interfaces au niveau de l'électrode négative.

Il faut noter que si l'on se contentait de revêtir la surface de l'électrolyte faisant face au lithium d'une mince couche d'halogénure ou de chalcogénure de lithium, on n'obtiendrait pas un meilleur accrochage entre le lithium et l'électrolyte que celui obtenu en l'absence d'une telle couche.

Ce qui en fait permet l'accrochage, c'est que l'halogène ou le chalcogène, contenu dans l'électrolyte, réagit avec le lithium qui est directement au contact de l'électrolyte pour former, in situ, une mince couche d'accrochage, continue ou discontinue, constituée par un halogénure ou chalcogénure de lithium.

Avantageusement, on utilisera l'iode et le soufre car les produits de réactions avec le lithium, LiI et $Li_2S$, sont des conducteurs ioniques par les ions Li. La conductivité de LiI est égale à $10^{-7}\Omega^{-1}cm^{-1}$ à 25°C, celle de $Li_2S$ est égale $\Omega^{-1}cm^{-1}$ dans les mêmes conditions. En outre LiI et $Li_2S$ sont des constituants de l'électrolyte utilisé, dont la formule a été indiqué ci-dessus.

Selon une caractéristique d'une mise en œuvre préférée de l'invention, l'électrolyte comporte en volume de 5 à 50% de soufre ou d'iode.

Préférentiellement dans le cadre de l'invention, on utilisera, comme matériau de l'électrode positive l'iode ou le soufre.

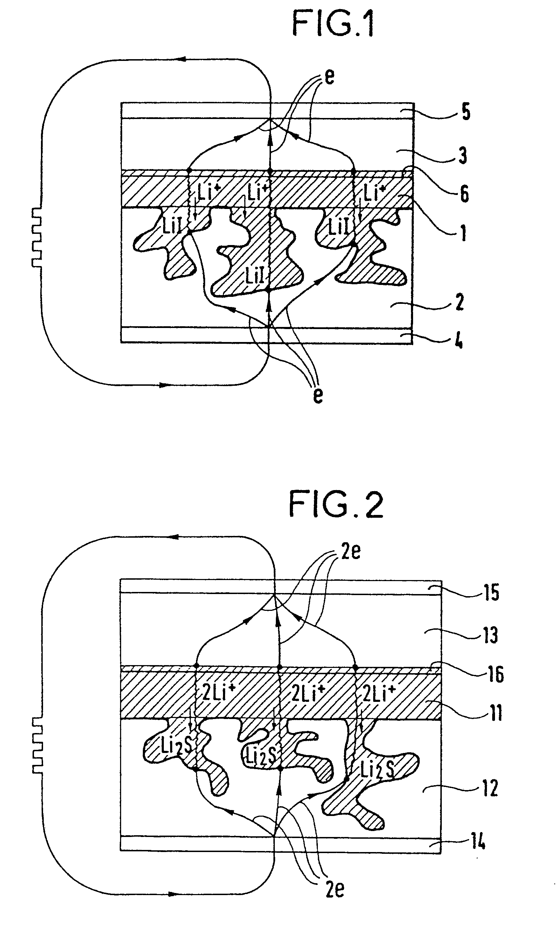

Sur la figure 1, on a représente le schéma réactionnel relatif au couple $Li/I_2$ dans le cadre de la présente invention.

L'électrolyte solide 1 répond à la forme 0,37 $Li_2S$, C, 18 $P_2S_5$, 0,45 LiI et comprend de 5 à 50% en volume d'iode.

L'électrode positive 2 est constituée par un mélange de graphite, d'électrolyte solide et d'iode, contenant en volume de 20 à 80% d'électrolyte solide.

L'électrode négative 3 est en lithium.

Les références 4 et 5 désignent respectivement les collecteurs cathodique et anodique.

La couche d'accrochage d'iodure de lithium 6 formée ainsi in situ à la surface de l'anode 3 permet la jonction avec l'électrolyte vitreux 1 et supprime les effets de polarisation rencontrés précédemment. On a mis en évidence le déplacement des électrons e lorsque le circuit électrique est fermé sur une résistance.

Sur la figure 2, on a représenté le schéma réactionnel relatif au couple Li/S dans le cadre de la présente invention.

L'électrolyte 11 répond à la même formule que dans le cas de Li/I$_2$ et contient de 5 à 50% en volume de soufre.

L'électrode positive 12 est constituée par un mélange de graphite, d'électrolyte solide et de soufre. Elle peut être obtenue à partir d'un mélange graphite-soufre que l'on porte préalablement à 120°C jusqu'à l'obtention d'un mélange pâteux. Après refroidissement et broyage la poudre de soufre graphité par ce procédé est mélangée avec de l'électrolyte solide par exemple dans les proportions volumiques suivantes: 50% électrolyte solide et 50% de soufre graphité.

L'électrode négative 13 est en lithium. Les références 14 et 15 désignent respectivement les collecteurs cathodique et anodique.

La référence 16 désigne la couche d'accrochage de Li$_2$S formée in situ.

La formation de cette couche peut être accélérée par chauffage de l'élément vers 60 à 70°C après assemblage.

Des matériaux d'électrode positive autres que le soufre et l'iode peuvent également être utilisés dans le cadre de l'invention.

Ces matériaux devront toutefois comporter des tensions de travail voisines ou supérieures à celles de couples précédents tout en restant compatibles avec le domaine d'électroactivité du milieu. En d'autres termes, ces tensions devront dans le cas de l'utilisation de l'iode être égales ou peu différentes de celle du couple Li/I$_2$ et dans le cas de l'utilisation du soufre supérieures ou égales à celle du couple Li/S; ceci afin d'éviter la création de tensions initialement élevées qui ne manqueraient pas de se développer en raison de l'interface électrode positive-életrolyte.

Ainsi on pourra utiliser comme matière active positive l'oxyphosphate de cuivre Cu$_4$O (PO$_4$)$_2$.

La tableau ci-dessous récapitule quelques exemples de systèmes:

| Anode | Couche interface | Couche Médiane (Electrolyte solide ES + halogène ou chalcogène) | Cathode |
|---|---|---|---|
| 1 Li | LiI | ES + I$_2$ | ES+graphite + I$_2$ |
| 2 Li | Li$_2$S | ES + S | ES+graphite + S |
| 3 Li | LiI | ES + I$_2$ | ES+graphite+Cu$_4$O(PO$_4$)$_2$ |
| 4 Li | LiI | ES + I$_2$ | ES+graphite+I$_2$+Cu$_4$(PO$_4$)$_2$ |
| 5 Li | Li$_2$S | ES + S | ES+graphite+Cu$_4$O(PO$_4$)$_2$ |
| 6 Li | Li$_2$S | ES + S | ES+graphite+S+Cu$_4$O(PO$_4$)$_2$ |

L'incorporation de soufre à la matière active positive dans le cas de l'exemple 6 peut se révéler avantageuse pour doper la tension du couple Li/Cu$_4$O(PO$_4$)$_2$, ceci en raison même du gain d'énergie de formation récupérable par formation de CuS (processus de sulfuration chimique du cuivre) in situ au cours de la décharge, ce gain représenterait en théorie environ + 250 mV par rapport au couple Li/Cu$_4$O(PO$_4$)$_2$, rapprochant ainsi la tension de ce couple de celle du couple Li/I$_2$.

**Revendications**

1. Pile au lithium comportant un électrolyte solide formé par une composition vitreuse conductrice répondant à la formule aP$_2$S$_5$, bLi$_2$S, cLiX dans laquelle X représente le chlore, le brome ou l'iode, a, b, c étant des nombres choisis de telle sorte que le rapport

$$\frac{b}{a+b}$$

soit compris entre 0,61 et 0,70 et le rapport

$$\frac{c}{a+b+c}$$

soit inférieur ou égal à une limite correspondant à la solubilité en phase vitreuse de LiX dans le composé aP$_2$S$_5$, bLi$_2$S, la matière active positive comportant en volume 20 à 80% d'électrolyte solide, ainsi qu'un conducteur électronique, caractérisée par le fait que l'on introduit dans l'électrolyte un corps choisi parmi les halogènes et les chalcogènes, afin de réaliser in situ par réaction chimique à l'interface lithium-électrolyte une couche d'accrochage conductrice ioniquement formée par un halogènure ou un chalcogènure de lithium.

2. Pile selon la revendication 1, caractérisée par le fait que le corps introduit dans l'électrolyte est choisi parmi le soufre et l'iode.

3. Pile selon la revendication 2, caractérisée par le fait que l'électrolyte comporte en volume de 5 à 50% de soufre ou d'iode.

4. Pile selon l'une des revendications 1 à 3, caractérisée par le fait que la matière positive comprend au moins un corps choisi parmi le soufre, l'iode et l'oxyphosphate de cuivre.

5. Pile selon la revendication 4, caractérisée par le fait que la matière positive comprend un mélange d'iode et d'oxyphosphate de cuivre.

6. Pile selon la revendication 4, caractérisée par le fait que la matière positive comprend un mélange de soufre et d'oxyphosphate de cuivre.

7. Pile selon l'une des revendications 1 à 6, caractérisée par le fait que l'électrolyte répond à la formule 0,37 Li$_2$S, 0,18 P$_2$S$_5$, 0,45 LiI.

**Patentansprüche**

1. Lithiumzelle mit einem festen Elektrolyten, bestehend aus einer leitenden glasartigen Zu-

sammensetzung, die der Formel $aP_2S_5$, $bLi_2S$, $cLiX$ entspricht, in der X Chlor, Brom oder Jod darstellt und a, b, c derart ausgewählte Zahlen sind, dass das Verhältnis b/(a+b) zwischen 0,61 und 0,70 und das Verhältnis a/(a+b+c) kleiner als oder gleich einem Grenzwert ist, der der Lösbarkeit von LiX in der Zusammensetzung $aP_2S_5$, $bLi_2S$ in der glasartigen Phase entspricht, wobei das aktive positive Material 20 bis 80 Volumenprozent festen Elektrolyts und einen Elektronenleiter aufweist, dadurch gekennzeichnet, dass man in den Elektrolyten einen Körper einführt, der aus den Halogenen und den Chalcogenen ausgewählt wird, um in situ durch chemische Reaktion am Übergang zwischen Lithium und Elektrolyt eine ionenleitende Haftschicht herzustellen, die aus einem Lithiumhalogenid oder einem Lithiumchalcogenid gebildet wird.

2. Zelle nach Anspruch 1, dadurch gekennzeichnet, dass der in den Elektrolyten eingeführte Stoff entweder Jod oder Schwefel ist.

3. Zelle nach Anspruch 2, dadurch gekennzeichnet, dass der Elektrolyt 5 bis 50 Volumenprozent Schwefel oder Jod enthält.

4. Zelle nach einem der Ansprüche 1 bis 3, dadurch gekennzeichnet, dass das positive Material mindestens einen Stoff aufweist, der aus der von Schwefel, Jod und Kupferoxydphosphat gebildeten Gruppe ausgewählt wird.

5. Zelle nach Anspruch 4, dadurch gekennzeichnet, dass das positive Material eine Mischung aus Jod und Kupferoxyphosphat enthält.

6. Zelle nach Anspruch 4, dadurch gekennzeichnet, dass das positive Material eine Mischung aus Schwefel und Kupferoxyphosphat enthält.

7. Zelle nach einem der Ansprüche 1 bis 6, dadurch gekennzeichnet, dass der Elektrolyt der Formel 0,37 $Li_2S$, 0,18 $P_2S_5$, 0,45 LiI entspricht.

## Claims

1. A lithium cell including a solid electrolyte constituted by a conductive vitreous compound having the formula $aP_2S_5$, $bLi_2S$, $cLiX$, where X represents chlorine, bromine or iodine, and where a, b, c are numbers chosen so that the ratio b/(a+b) lies between 0,61 and 0,70, and so that the ratio c/(a+b+c) is less than or equal to a limit corresponding to the solubility of LiX in the compound $aP_2S_5$, $bLi_2S$ in the vitreous phase, with the positive active material comprising 20% to 80% by volume of solid electrolyte together with an electronic conductor, characterized in that a substance chosen from the halogens and the chalcogens is included in the electrolyte in order to produce an in situ chemical reaction at the lithium-electrolyte interface, thereby creating a ionically conductive bonding layer constituted by a lithium halogenide or chalcogenide.

2. A cell according to claim 1, characterized in that said substance included in the electrolyte is chosen from iodine and sulphur.

3. A cell according to claim 2, characterized in that the electrolyte contains 5% to 50% by volume of sulphur or iodine.

4. A cell according to one of claims 1 to 3, charcterized in that the positive material includes at least one substance chosen from sulphur, iodine and copper oxyphosphate.

5. A cell according to claim 4, characterized in that the positive material comprises a mixture of iodine and copper oxyphosphate.

6. A cell according to claim 4, characterized in that the positive material comprises a mixture of sulphur and copper oxyphosphate.

7. A cell according to one of claims 1 to 6, characterized in that the electrolyte has the formula 0,37 $Li_2S$, 0,18 $P_2S_5$, 0,45 LiI.

# FIG.1

# FIG.2